# EUROPEAN PATENT APPLICATION

(11) **EP 2 826 819 A1**
(43) Date of publication of application: **21.01.2015**
(21) Application number: 12871091.0
(22) Date of filing: 19.11.2012
(51) Int. Cl.: C08L 101/00, B60C 1/00, B60C 5/14, C08L 15/02, C08L 77/00

(54) **THERMOPLASTIC ELASTOMER COMPOSITION**

(30) Priority: 13.03.2012 JP 2012055851
(71) Applicant: The Yokohama Rubber Company, Limited, Tokyo 105-8685 (JP)
(72) Inventor: TOMOI, Shusaku, Hiratsuka-shi Kanagawa 254-8601 (JP)
(74) Representative: Hoffmann Eitle
(86) International application number: PCT/JP2012/079978
(87) International publication number: WO 2013/136596

(57) **Abstract**

A thermoplastic elastomer composition which comprises (A) a thermoplastic resin, (B) a halogenated isoolefin/para-alkylstyrene copolymer rubber, and (C) a thermoplastic elastomer, wherein the thermoplastic resin (A) forms a continuous phase, the halogenated isoolefin/para-alkylstyrene copolymer rubber (B) and the thermoplastic elastomer (C) have been separately dispersed in the continuous phase, the halogenated isoolefin/para-alkylstyrene copolymer (B) has been crosslinked, the thermoplastic elastomer (C) has not been crosslinked, and the amount of the thermoplastic elastomer (C) is 20-50 mass% with respect to the total amount of the halogenated isoolefin/para-alkylstyrene copolymer rubber (B) and the thermoplastic elastomer (C).

## Description

### TECHNICAL FIELD

The present invention relates to a thermoplastic elastomer composition, and more particularly, a thermoplastic elastomer composition having excellent processability and dynamic fatigue durability and as well as manufactured articles having a layer formed from the thermoplastic elastomer composition.

### BACKGROUND ART

Thermoplastic elastomer compositions having a sea-island structure in which an elastomer component is dispersed as a dispersed phase (island phase) in a thermoplastic resin continuous phase (sea phase) are known (for example, Patent Documents 1 and 2). Usually, in such a thermoplastic elastomer composition, in order to stabilize (or fix) the sea-island structure, it is desirable to crosslink the elastomer component of the dispersed phase. In addition, in order to increase the dynamic fatigue durability of the thermoplastic elastomer composition, it is conceivable that the ratio of the crosslinked elastomer component in the dispersed phase to the thermoplastic resin continuous phase. However, since the crosslinked elastomer component in the dispersed phase is non-thermoplastic, the thermoplasticity of the thermoplastic elastomer composition is reduced as the ratio of the crosslinked elastomer component increases in the dispersed phase to the thermoplastic resin continuous phase, resulting in the decrease in flowability of the thermoplastic elastomer composition at a temperature during processing such as kneading and extrusion processing. Although Patent Document 3 describes mixing a thermoplastic resin, an elastomer component and a plasticizer at specific volume fractions, and subsequently removing the plasticizer to obtain an elastomer composition in which a comparatively large amount of the elastomer component is dispersed in the continuous phase of a comparatively small amount of the thermoplastic resin, the elastomer composition described in Patent Document 3 is not thermoplastic. Thus, a thermoplastic elastomer composition having a good processability (e.g., kneading properties, formability such as extrusion formability and inflation moldability) and improved dynamic fatigue durability has been desired in the art.

### RELATED DOCUMENTS

### PATENT DOCUMENTS

[Patent Document 1] Japanese Unexamined Patent Publication (Kokai) No. 2010-132850
[Patent Document 2] Japanese Unexamined Patent Publication (Kokai) No. 2011-21146
[Patent Document 3] International Publication No. 2007/100157

### SUMMARY OF INVENTION

### PROBLEMS TO BE SOLVED BY THE INVENTION

Accordingly, an object of the present invention is to provide a thermoplastic elastomer composition having a good processability and improved dynamic fatigue durability.

### MEANS TO SOLVE THE PROBLEMS

According to the present invention, a thermoplastic elastomer composition is provided comprising:
(A) a thermoplastic resin,
(B) a halogenated isoolefin-paraalkylstyrene copolymer rubber, and
(C) a thermoplastic elastomer,
wherein thermoplastic resin (A) forms a continuous phase, and halogenated isoolefin-paraalkylstyrene copolymer rubber (B) and thermoplastic elastomer (C) are dispersed separately in the continuous phase, wherein halogenated isoolefin-paraalkylstyrene copolymer rubber (B) is crosslinked, and thermoplastic elastomer (C) is not crosslinked, and wherein thermoplastic elastomer (C) is in an amount of 20 to 50 wt% based on the total amount of halogenated isoolefin-paraalkylstyrene copolymer rubber (B) and thermoplastic elastomer (C).

The thermoplastic elastomer composition of the present invention exhibits good processability and dynamic fatigue durability, and therefore is useful in various applications (for example, pneumatic tires, hoses for gas or fluid transport, ship fenders, rubber bags, fuel tanks, etc.) that require such properties. According to the present invention, various manufactured articles produced from the thermoplastic elastomer composition, for example a pneumatic tire having a layer formed from the thermoplastic elastomer composition of the present invention, are also provided.

### MODE FOR CARRYING OUT THE INVENTION

In the thermoplastic elastomer composition of the present invention, at least one thermoplastic resin (component A) forms a continuous phase, and a halogenated isoolefin-paraalkylstyrene copolymer rubber (component B) and at least one thermoplastic elastomer (component C) are dispersed separately in the continuous phase. That is, halogenated isoolefin-paraalkylstyrene copolymer rubber (B) forms a first dispersed phase in the continuous phase, and at least one thermoplastic elastomer (C) forms another dispersed phase different from the first dispersed phase. In case that two or more thermoplastic elastomers are used as component (C), the mixture of the two or more thermoplastic elastomers may form a second dispersed phase, or two or more thermoplastic elastomers may form separate dispersed phases. In case that two or more thermoplastic elastomers form separate dispersed phases, separately from the first dispersed phase formed by halogenated isoolefin-paraalkylstyrene copolymer rubber (B), two or more thermoplastic elastomers may form two or more dispersed phase (for example, a second dispersed phase, a third dispersed phase, etc.), depending on the number of the types of thermoplastic elastomers.

Examples of thermoplastic resin (A) which can be used in the thermoplastic elastomer composition of the present invention include polyamide-based resins, polyester-based resin, polynitrile-based resins, polymethacrylate-based resins, polyvinyl-based resins, cellulosic resins, fluororesins, imide-based resins, polystyrenic resins, polyolefinic resins, etc. One of the above thermoplastic resins may be used, or two or more of the thermoplastic resins may be used in combination. Examples of polyamide-based resins include aliphatic polyamides such as Nylon 6, Nylon 66, Nylon 46, Nylon 11, Nylon 12, Nylon 69, Nylon 610, Nylon 612, Nylon 6/66, Nylon 6/66/12, Nylon 6/66/610, Nylon MXD6, Nylon 6T, Nylon 6/6T and Nylon 9T, as well as aromatic polyamides, etc. Polyester-based resins include aromatic polyesters such as polybutylene terephthalate (PBT), polyethylene terephthalate (PET), polyethylene isophthalate (PEI), PET/PEI copolymer, polyarylate (PAR), polybutylene naphthalate (PBN), liquid crystal polyesters, polyoxyalkylenediimidic acid/polybutylate terephthalate copolymers, etc. Polynitrile-based resins include polyacrylonitrile (PAN), polymethacrylonitrile, acrylonitrile/styrene copolymer (AS), methacrylonitrile/styrene copolymer, methacrylonitrile/styrene/butadiene copolymer, etc. Polymethacrylate-based resins include poly(methyl methacrylate) (PMMA), poly(ethyl methacrylate), etc. Polyvinyl-based resins include vinyl acetate (EVA), poly(vinyl alcohol) (PVA), vinyl alcohol/ethylene copolymer (EVOH), poly(vinylidene chloride) (PVDC), poly(vinyl chloride) (PVC), vinyl chloride/vinylidene chloride copolymer, vinylidene chloride/methyl acrylate copolymer, etc. Cellulosic resins include cellulose acetate, cellulose acetate butylate, etc. Fluororesins include poly(vinylidene fluoride) (PVDF), poly(vinyl fluoride) (PVF), polychlorofluoroethylene (PCTFE), tetrafluoroethylene/ethylene copolymer (ETFE), etc. Imide-based resins include aromatic polyimides (PI), etc. Polystyrenic resins include polystyrene (PS), etc. Polyolefinic resins include polyethylene (PE), polypropylene (PP), etc.

In the thermoplastic elastomer composition of the present invention, thermoplastic resin (A) preferably comprises or consists of at least one polyamide-based resin selected from the group consisting of polyamide-based resins, for example, aliphatic polyamides, such as Nylon 6, Nylon 66, Nylon 46, Nylon 11, Nylon 12, Nylon 69, Nylon 610, Nylon 612, Nylon 6/66, Nylon 6/66/12, Nylon 6/66/610, Nylon MXD6, Nylon 6T, Nylon 6/6T and Nylon 9T, as well as aromatic polyamides, in view of achieving good processability and dynamic fatigue durability as well as good gas permeation prevention properties. Nylon 6, Nylon 6/66 and Nylon 612 are particularly preferred as polyamide-based resins. In view of dynamic fatigue durability and gas permeation prevention properties, polyamide-based resins are preferred as thermoplastic resin (A). A thermoplastic elastomer composition prepared with thermoplastic resin (A) which comprises or consists of at least one polyamide-based resin can provide good processability and excellent dynamic fatigue durability and gas permeation prevention properties. Thus, such a thermoplastic elastomer composition can be used, for example, in the production of pneumatic tires, after shaping into a desired form such as sheet or tube, and is useful, for example, as a gas permeation prevention layer (or inner liner) of a pneumatic tire.

Halogenated isoolefin-paraalkylstyrene copolymer rubber (B) which can be used in the thermoplastic elastomer composition of the present invention can be obtained by, for example, halogenating a copolymer of an isoolefin and a paraalkylstyrene. The mixing ratio of the isoolefin and paraalkylstyrene, polymerization degree, average molecular weight, polymerization configuration (block copolymer, random copolymer, etc.), viscosity, halogen atom, etc., in the halogenated isoolefin-paraalkylstyrene copolymer rubber are not particularly limited, and can be selected by a person with ordinary skill in the art according to the physical properties, etc., required to the thermoplastic elastomer composition. Examples of the isoolefin which constitutes the halogenated isoolefin-paraalkylstyrene copolymer rubber include isobutylene, isopentene, isohexene, etc., and isobutylene is preferred as the isoolefin. Examples of the paraalkylstyrene which constitutes the halogenated isoolefin-paraalkylstyrene copolymer rubber include paramethylstyrene, paraethylstyrene, parapropylstyrene, parabutylstyrene, etc., and paramethylstyrene is preferred as the paraalkylstyrene. Examples of the halogen atom which constitutes the halogenated isoolefin-paraalkylstyrene copolymer rubber include fluorine, chlorine, bromine and iodine, and bromine is preferred as the halogen atom. Particularly preferred halogenated isoolefin-paraalkylstyrene copolymer rubbers are brominated isobutylene-paramethylstyrene copolymer rubbers. Brominated isobutylene-paramethylstyrene copolymer rubbers are available from, for example, ExxonMobile Chemical Company under the trade name of Exxpro^{®}. Preferably, the amount of the halogenated isoolefin-paraalkylstyrene copolymer rubber is from 80 to 200 wt%, and more preferably from 100 to 180 wt%, based on the total amount of thermoplastic resin (A). Too low a proportion of halogenated isoolefin-paraalkylstyrene copolymer rubber (B) results in decrease in fatigue durability, and conversely, too much a proportion of halogenated isoolefin-paraalkylstyrene copolymer rubber (B) results in decrease in flowability during melting, and thereby decreasing processability.

The type and amount of the crosslinking agent can be selected by a person with ordinary skill in the art, depending on the crosslinking conditions. Examples of the crosslinking agent include zinc oxide, magnesium oxide, m-phenylenebismaleimide, alkylphenol resins and halogenated products thereof, secondary amines, for example, N-(1,3-dimethylbutyl)-N'-phenyl-p-phenylenediamine (trivial name: 6PPD), etc. Zinc oxide and N-(1,3-dimethylbutyl)-N'-phenyl-p-phenylenediamine (6PPD) are preferred as the crosslinking agent. The amount of the crosslinking agent is typically 0.5 to 15 parts by weight, and more preferably 3 to 10 parts by weight, with respect to 100 parts by weight of halogenated isoolefin-paraalkylstyrene copolymer (B). Too low an amount of the crosslinking agent results in decrease in fatigue durability. Conversely, too much crosslinking agent may cause scorching during kneading or processing, or may cause appearance defects, such as fish eye, after processing into a film, etc.

Thermoplastic elastomer (C) preferably comprises or consists of at least one selected from the group consisting of copolymers of two or more olefins (for example, ethylene-propylene copolymer, ethylene-butene copolymer, ethylene-hexene copolymer, ethylene-octene copolymer, etc.), styrene-olefin copolymers (for example, styrene-ethylene block copolymer, styrene-propylene block copolymer, styrene-butadiene block copolymer, styrene-isoprene block copolymer, styrene-ethylene-styrene block copolymer, styrene-propylene-styrene block copolymer, styrene-butadiene-styrene block copolymer, styrene-ethylene-butylene block copolymer, styrene-ethylene-propylene-styrene block copolymer, styrene-ethylenebutylene-styrene block copolymer, etc.), ethylene-unsaturated carboxylic acid copolymers (for example, ethylene-acrylic acid copolymer, ethylene-methacrylic acid copolymer, etc.), ethylene-unsaturated carboxylic acid ester copolymers (for example, ethylene-ethyl acrylate copolymer, ethylene-ethyl methacrylate copolymer, etc.), and carboxylic acid anhydride-modified products thereof (for example maleic anhydride-modified products). The amount of thermoplastic elastomer (C) is from 20 to 50 wt% based on the total amount of halogenated isoolefin-paraalkylstyrene copolymer rubber (B) and thermoplastic elastomer (C). Preferably, thermoplastic elastomer (C) exhibits a melt flow rate of 0.7 g/10 min. or more as measured in accordance with JIS K7210 at a temperature of 230°C and a load of 21.2 Newton. In case that the melt flow rate of thermoplastic elastomer (C) is less than 0.7 g/10 min., it is difficult to finely disperse the thermoplastic elastomer in the thermoplastic resin under the melt-kneading conditions during melt-kneading of the thermoplastic elastomer with the thermoplastic resin and the halogenated isoolefin-paraalkylstyrene copolymer rubber, resulting in a kneaded material which is difficult to be extrusion-formed.

The production of the thermoplastic elastomer composition of the present invention can be conducted by, for example, melt-kneading a thermoplastic resin, a halogenated isoolefin-paraalkylstyrene copolymer rubber, and a thermoplastic elastomer at a temperature which is at least equal to or higher than the melting point of the thermoplastic resin, in the presence of a crosslinking agent. The melt-kneading in the presence of a crosslinking agent allows the halogenated isoolefin-paraalkylstyrene copolymer rubber to be dynamically crosslinked. In the thermoplastic elastomer composition, the dispersed phase can be stabilized (or fixed) in the continuous phase by the dynamic crosslinking. Optionally, common ingredients for common resins and rubbers, such as fillers, reinforcing agents, processing aids, compatibilizers, stabilizers, antioxidants, anti-aging agents, etc., may optionally be added during blending of a thermoplastic resin, a halogenated isoolefin-paraalkylstyrene copolymer rubber and a thermoplastic elastomer to improve properties such as reinforcing properties, processability, dispersibility, heat resistance, antioxidant properties, etc., insofar as the object of the present invention is not diminished. Optionally, prior to the production of the thermoplastic elastomer composition of the present invention by blending a thermoplastic resin, a halogenated isoolefin-paraalkylstyrene copolymer rubber and a thermoplastic elastomer, common ingredients for common resins and rubbers, such as fillers, reinforcing agents, processing aids, compatibilizers, stabilizers, antioxidants, anti-aging agents, etc., may be added beforehand to one or more of the thermoplastic resin, halogenated isoolefin-paraalkylstyrene copolymer rubber and thermoplastic elastomer to improve properties such as reinforcing properties, processability, dispersibility, heat resistance, antioxidant properties, etc., insofar as the object of the present invention is not diminished.

The thermoplastic elastomer composition of the present invention can be produced by melt-kneading the above essential components and optional ingredients using a kneading machine which is commonly used in the production of a thermoplastic resin composition, such as kneader, Banbury mixer, single-screw kneading extruder, twin-screw kneading extruder, etc. Melt-kneading is preferably carried out using a twin-screw kneading extruder, in view of the high productivity thereof. Although the kneading conditions depend on the types and amounts of the essential components and optional ingredients to be used, the lower limit of the melt-kneading temperature is at least equal to or higher than the melting point of thermoplastic resin (A), and preferably at a temperature which is about 20°C or more higher than the melting point of thermoplastic resin (A). The melt-kneading temperature is typically from about 200°C to about 250°C. The melt-kneading time is typically from about 1 to about 10 minutes, and preferably from about 2 to about 6 minutes.

The thermoplastic resin composition, which has been melt-kneaded as described above, may then be extruded in molten state from a die attached to the outlet port of a twin-screw kneading extruder into a film or tube form, etc., or may be extruded into a strand form, and pelletized with a resin pelletizer, and subsequently the resulting pellets are formed into a desired form, such as a film, sheet or tube form, depending on the application, using a common resin forming technique such as inflation forming, calendar forming, extrusion forming, etc.

The methods for producing manufactured articles having a layer formed from the thermoplastic elastomer composition of the present invention can be explained based on a method for producing a pneumatic tire as an example. As a method for producing a pneumatic tire having a layer formed from the thermoplastic elastomer composition of the present invention, any conventional method may be used. For example, the thermoplastic elastomer composition of the present invention is extruded into a film having a predetermined width and thickness, and the resulting film is laminated onto a tire molding drum in cylindrical form, tire members such as a carcass layer, a belt layer, a tread layer, etc., are sequentially laminated thereon, and the resulting green tire is removed from the tire molding drum. Then, the green tire is vulcanized in accordance with a conventional technique to produce a pneumatic tire having a layer (for example, as an inner liner) formed from the thermoplastic elastomer composition of the present invention.

The methods for producing manufactured articles having a layer formed from the thermoplastic elastomer composition of the present invention can be explained by a method for producing a hose as an example. As a method for producing a hose having a layer formed from the thermoplastic elastomer composition of the present invention, any conventional method may be used. For example, the thermoplastic elastomer composition of the present invention is extruded on a mandrel precoated with a releasing agent with an extruder in a crosshead extrusion manner to form an inner tube, and subsequently reinforcing yarns or reinforcing steel wires are braided on the inner tube with a braiding machine to form a reinforcing layer, and a thermoplastic resin is extruded onto the reinforcing layer to form an outer tube. If needed, a layer of another thermoplastic resin and/or adhesive may be provided between the inner tube and the reinforcing layer and between the outer tube of the reinforcing layer. Finally, the mandrel is withdrawn to obtain a hose having a layer formed from the thermoplastic elastomer composition of the present invention.

### EXAMPLES

The present invention will be further explained with reference to the following examples and comparative examples, and it should be understood that the scope of the present invention is not limited by these examples.

### RAW MATERIALS

Thermoplastic resin 1: Nylon 6/66 copolymer (Novamid 2010R manufactured by DSM Japan Engineering Plastics Co.) Thermoplastic resin 2: Nylon 6 (UBE Nylon 1013B manufactured by Ube Industries, Ltd.)

Thermoplastic resin 3: Nylon 612 (UBE Nylon 7034B manufactured by Ube Industries, Ltd.)

Br-IPMS: Brominated isobutylene-paramethylstyrene copolymer rubber (Exxpro^{®} MDX89-4 manufactured by ExxonMobile Chemical Company)

Thermoplastic elastomer 1: Maleic anhydride-modified ethylene-butene copolymer (Tafmer MH7010 manufactured by Mitsui Chemicals, Inc.) (MFR: 1.8 g/ 10 min.)

Thermoplastic elastomer 2: Maleic anhydride-modified ethylene-butene copolymer (Tafmer MH7020 manufactured by Mitsui Chemicals, Inc.) (MFR: 1.5 g/ 10 min.)

Thermoplastic elastomer 3: Maleic anhydride-modified ethylene-propylene copolymer (Tafmer MH0610 manufactured by Mitsui Chemicals, Inc.) (MFR: 0.7 g/ 10 min.)

Zinc oxide: zinc oxide of JIS grade 3 manufactured by Seido Chemical Industry Co., Ltd.

6PPD: SANTOFLEX 6PPD manufactured by Flexsys

Crosslinking aid: Beads Stearic Acid manufactured by Nippon Oil & Fat Co., Ltd.

### Preparation of Thermoplastic Elastomer Composition of Comparative Example 1

Br-IPMS was processed into pellets by a rubber pelletizer (manufactured by Moriyama Co., Ltd.). The resulting Br-IPMS pellets were kneaded with the thermoplastic resin, crosslinking agent and crosslinking aid at a blending ratio (in parts by weight) shown in Table 1 below at a temperature of 250°C for 3 minutes by a twin-screw kneading extruder (manufactured by The Japan Steel Works, Ltd.). The resulting kneaded mixture was extruded continuously from the outlet port of the twin-screw kneading extruder into a strand form, cooled with water, and cut with a cutter to obtain a thermoplastic elastomer composition in the form of pellets.

### Preparation of Thermoplastic Elastomer Compositions of Comparative Example 2 to 4 and Examples 1 to 6

In the same manner as in Comparative Example 1, Br-IPMS was processed into pellets by a rubber pelletizer (manufactured by Moriyama Co., Ltd.). The resulting Br-IPMS pellets were kneaded with the thermoplastic resin, thermoplastic elastomer, crosslinking agent and crosslinking aid at a blending ratio (in parts by weight) shown in Table 1 below at a temperature of 250°C for 3 minutes by a twin-screw kneading extruder (manufactured by The Japan Steel Works, Ltd.). The resulting kneaded mixture was extruded continuously from the outlet port of the twin-screw kneading extruder into a strand form, cooled with water, and cut with a cutter to obtain a thermoplastic elastomer composition in the form of pellets.

### Evaluations of Thermoplastic Elastomer Compositions

The thermoplastic elastomer compositions of Comparative Examples 1 to 4 and Examples 1 to 6 were evaluated for twin-screw kneading extrudability, extrusion formability and dynamic fatigue durability (constant strain fatigue durability and crack resistance).

### (1) Twin-Screw Kneading Extrudability

The thermoplastic elastomer compositions of Comparative Examples 1 to 4 and Examples 1 to 6 were evaluated for twin-screw kneading extrudability by observing the state of the strand in twin-screw kneading extrusion, and the observation results were graded according to the following criterion:
1: There are roughening and particulate defects on the strand, and pellets cannot be obtained due to generation of breakage.
2: Although there are roughening or particulate defects on the strand, pellets can be obtained.
3: Although there is a slight roughening or particulate defect on the strand, pellets can be obtained without any problem.
4: The strand is very smooth, and pellets can be obtained without any problem.

### (2) Extrusion Formability

The thermoplastic elastomer compositions of Comparative Examples 1 to 4 and Examples 1 to 6 were extruded into a sheet having a thickness of 1 mm at a temperature of 230°C using a T-die extrusion molding machine (single-screw extruder having a die width of 200 mm and a φ of 40 mm, manufactured by Pla Giken Co. Ltd.). The surface conditions of the resulting sheets were observed, and the observation results were graded according to the following criterion:
1: Unable to be processed into a sheet form.
2: There is a hole in the sheet and/or there observed significant irregularities on the surface of the sheet.
3: Although significant irregularities are not observed on the surface of the sheet, the surface of the sheet is not smooth.
4: The surface of the sheet is smooth.

### (3) Dynamic Fatigue Durability

Since it was not able to extrude the thermoplastic elastomer composition of Comparative Example 1 into a sheet form, the thermoplastic elastomer compositions of Comparative Examples 2 to 4 and Examples 1 to 6 were evaluated for constant strain fatigue durability as an index of dynamic fatigue durability, and for crack resistance as another index of dynamic fatigue durability.

### (2-a) Constant Strain Fatigue Durability

The thermoplastic elastomer compositions of Comparative Examples 2 to 4 and Examples 1 to 6 were extruded into a sheet having a thickness of 1 mm at an extrusion temperature of 230°C using a T-die extrusion molding machine. Six JIS-type 3 dumbbell samples were punched out from (the lengthwise direction of the dumbbell samples are parallel to the extrusion direction of the sheets). Strains were applied repeatedly to the resulting samples at a temperature of -35°C and a strain rate of 40% using a Constant Strain Fatigue Tester (manufactured by Ueshima Seisakusho Co., Ltd.). For each of Comparative Examples 2 to 4 and Examples 1 to 6, the test was continued until all of the samples were broken, and the number of times to breakage was Weibull plotted, and the 63% breakage probability point was determined as fatigue durability. The higher the value, the better the fatigue durability. The test results are shown in Table 1 below.

### (2-b) Crack Resistance in Pneumatic Tire

Firstly, a pressure-sensitive adhesive composition for laminating the thermoplastic elastomer composition as an air permeation preventing layer on the tire inner surface was prepared. The pressure-sensitive adhesive composition was prepared by dry-blending the components shown in Table 2 below, introducing the resulting mixture into a twin-screw kneading extruder (manufactured by The Japan Steel Works, Ltd.), and kneading the mixture at 130°C for 3 minutes. The resulting kneaded mixture was extruded into a strand form, cooled with water, and cut with a cutter to give a pressure-sensitive adhesive composition in the form of pellets.

Then, a laminate in the form of tube was prepared by extruding the pressure-sensitive adhesive composition in the form of pellets and the thermoplastic elastomer composition in the form of pellets at 230°C using an inflation molding machine (manufactured by Placo Co., Ltd.) to obtain a laminate in the form of a tubular double-layered film so that the thermoplastic elastomer composition is disposed at the inner side of the tube and the pressure-sensitive adhesive composition is disposed at the outer side of the tube, and blowing air into the tube to expand it, folding the tube with pinch rollers, and winding up the tube to obtain a laminate in the form of a tube. In the laminate, the thermoplastic elastomer composition layer had a thickness of 100 µm, and the pressure-sensitive adhesive composition layer has a thickness of 30 µm. This laminate was disposed on a tire molding drum as an inner liner so that the pressure-sensitive adhesive composition layer is positioned at the outer side (on the side opposite to the drum), and tire members such as a carcass layer, a belt layer, a tread layer, etc., comprising a unvulcanized rubber, were sequentially laminated thereon, and the resulting green tire was removed from the tire molding drum. Then, the green tire was vulcanized by heating according to conventional technique to produce a tire having a size of 195/65R15. The produced tire was mounted on a 15x6JJ rim, was set to an internal pressure of 200 kPa (air), was mounted on a FF passenger car of 1800cc displacement, and run on actual road for 30,000 km. Thereafter, the tire was removed from the rim, and the thermoplastic elastomer layer disposed on the inner surface of the tire was visually observed to determine the number of cracks. The smaller the number of cracks, the more superior the durability is. The results are shown in Table 1 below.

[Table 1]

**Table 1**

| | | Comp. Ex. 1 | Comp. Ex. 2 | Comp. Ex. 3 | Ex. 1 | Ex. 2 | Comp. Ex. 4 | Ex. 3 | Ex. 4 | Ex. 5 | Ex. 6 |
|---|---|---|---|---|---|---|---|---|---|---|---|
| Thermoplastic resin 1 | | 63.0 | 63.0 | 63.0 | 63.0 | 63.0 | 63.0 | 63.0 | 63.0 | 50.4 | - |
| Thermoplastic resin 2 | | - | - | - | - | - | - | - | - 12.6 | 12.6 | 52.0 |
| Thermoplastic resin 3 | | - | - | - | - | - | - | - | - | - 12.0 | 12.0 |
| Br-IPMS | | 100.0 | 95.0 | 90.0 | 70.0 | 50.0 | 40.0 | 70.0 | 70.0 | 70.0 | 70.0 |
| Thermoplastic elastomer 1 (MFR: 1.8q/10 min.) | | - | 5.0 | 10.0 | 30.0 | 50.0 | 60.0 | - | - | 30.0 | 30.0 |
| Thermoplastic elastomer 2 (MFR: 1.5 g/10 min.) | | - | - | - | - | - | - | 30.0 | - | - | - |
| Thermoplastic elastomer 3 (MFR: 0.7 g/10 min.) | | - | - | - | - | - | - | - | 30.0 | - | - |
| Crosslinking agent | Zinc oxide | 5.0 | 5.0 | 5.0 | 5.0 | 5.0 | 5.0 | 5.0 | 5.0 | 5.0 | 5.0 |
| | 6PPD | 3.0 | 3.0 | 3.0 | 3.0 | 3.0 | 3.0 | 3.0 | 3.0 | 3.0 | 3.0 |
| Crosslinking aid | | 1.5 | 1.5 | 1.5 | 1.5 | 1.5 | 1.5 | 1.5 | 1.5 | 1.5 | 1.5 |
| Twin-screw kneading extrudability | | 2 | 3 | 4 | 4 | 4 | 3 | 4 | 4 | 4 | 4 |
| Extrusion formability | | 1 | 2 | 3 | 4 | 4 | 2 | 4 | 4 | 4 | 4 |
| Constant strain fatigue durability (x 10⁵) | | - | 1.20 | 2.00 | 5.30 | 3.80 | 1.00 | 4.00 | 2.70 | 4.90 | 9.50 |
| Crack resistance (number) | | - | 6 | 3 | 0 | 1 | 7 | 1 | 2 | 0 | 0 |

[Table 2]

**Table 2. Formulation of Pressure-Sensitive Adhesive Composition**

| | Amounts (parts by weight) |
|---|---|
| Epoxidized SBS⁽¹⁾ | 100 |
| Zinc oxide⁽²⁾ | 5 |
| Stearic acid⁽³⁾ | 1 |
| Vulcanization accelerator⁽⁴⁾ | 3 |
| Tackifying resin⁽⁵⁾ | 30 |

| | |
|---|---|
| Footnote of Table 2: Epoxidized SB: Epoxidized product of styrene-butadiene block copolymer (Epofriend AT501 manufactured by Daicel Chemical Industries Ltd.) Zinc oxide: Zinc oxide of JIS grade 3 manufactured by Seido Chemical Industry Co., Ltd. Stearic acid: Beads Stearic Acid manufactured by Nippon Oil & Fat Co., Ltd. Vulcanization accelerator: Nocceler TOT-N manufactured by Ouchi Shinko Chemical Industrial Co., Ltd. Tackifying agent: YS Resin D105 manufactured by Yasuhara Chemical Co., Ltd. | |

As can be seen from Table 1, Examples 1 to 6 exhibited improved twin-screw kneading extrudability, extrusion formability and dynamic fatigue durability as compared to Comparative Examples 1 to 4.

## Claims

1. A thermoplastic elastomer composition comprising:
(A) a thermoplastic resin,
(B) a halogenated isoolefin-paraalkylstyrene copolymer rubber, and
(C) a thermoplastic elastomer,
wherein thermoplastic resin (A) forms a continuous phase, and halogenated isoolefin-paraalkylstyrene copolymer rubber (B) and thermoplastic elastomer (C) are dispersed separately in the continuous phase, wherein halogenated isoolefin-paraalkylstyrene copolymer rubber (B) is crosslinked, and thermoplastic elastomer (C) is not crosslinked, and wherein the amount of thermoplastic elastomer (C) is in an amount of 20 to 50 wt% based on the total amount of halogenated isoolefin-paraalkylstyrene copolymer rubber (B) and thermoplastic elastomer (C).

2. The thermoplastic elastomer composition according to claim 1, wherein thermoplastic resin (A) comprises at least one polyamide resin selected from the group consisting of Nylon 6, Nylon 66, Nylon 46, Nylon 11, Nylon 12, Nylon 69, Nylon 610, Nylon 612, Nylon 6/66, Nylon 6/66/12, Nylon 6/66/610, Nylon MXD6, Nylon 6T, Nylon 6/6T, Nylon 9T, and aromatic nylons, or consists of at least one polyamide resin selected from said group.

3. The thermoplastic elastomer composition according to claim 1 or 2, wherein halogenated isoolefin-paraalkylstyrene copolymer rubber (B) is in an amount of 80 to 200 parts by weight with respect to 100 parts by weight of thermoplastic resin (A).

4. The thermoplastic elastomer composition according to any one of claims 1 to 3, wherein halogenated isoolefin-paraalkylstyrene copolymer rubber (B) is crosslinked with at least one crosslinking agent selected from zinc oxide and N-(1,3-dimethylbutyl)-N'-phenyl-p- phenylenediamine.

5. The thermoplastic elastomer composition according to any one of claims 1 to 4, wherein thermoplastic elastomer (C) comprises at least one selected from styrene-olefin copolymers, ethylene-unsaturated carboxylic acid copolymers, ethylene-unsaturated carboxylic acid ester copolymers, and acid anhydride-modified products thereof, or consists of at least one selected from said group.

6. The thermoplastic elastomer composition according to any one of claims 1 to 5, wherein thermoplastic elastomer (C) exhibits a melt flow rate of 0.7 g/10 min. or more as measured in accordance with JIS K7210 at a temperature of 230°C and a load of 21.2 Newton.

7. A pneumatic tire having a layer formed from the thermoplastic elastomer composition according to any one of claims 1 to 6.
